Europäisches Patentamt

European Patent Office

Office européen des brevets

(11) Veröffentlichungsnummer: **0 267 308 B1**

(12) **EUROPÄISCHE PATENTSCHRIFT**

(19)

(45) Veröffentlichungstag der Patentschrift: **11.03.92**

(21) Anmeldenummer: **86115602.4**

(22) Anmeldetag: **11.11.86**

(51) Int. Cl.5: **G01N 25/48**

(54) Verfahren und Vorrichtung zur Dynamischen-Leistungs-Differenz-Kalorimetrie.

(43) Veröffentlichungstag der Anmeldung:
**18.05.88 Patentblatt 88/20**

(45) Bekanntmachung des Hinweises auf die
Patenterteilung:
**11.03.92 Patentblatt 92/11**

(84) Benannte Vertragsstaaten:
**AT BE CH DE ES FR GB GR IT LI LU NL SE**

(56) Entgegenhaltungen:
**EP-A- 0 189 882**
**WO-A-82/01248**

**TRAC. TRENDS IN ANALYTICAL CHEMISTRY,**
**Band 2, Nr. 4, April 1983, Seiten 88-92, Else-**
**vier Scientific Publishing Co., Cambridge,**
**GB; C. TAYLOR: "Differential scanning calo-**
**rimetry and fibre analysis"**

**PATENT ABSTRACTS OF JAPAN, Band 9, Nr.**
**207 (P-382)[1930], 24. August 1985; & JP-A-60**
**68 411**

(73) Patentinhaber: **BODENSEEWERK PERKIN-**
**ELMER GMBH**
**Alte Nussdorfer Strasse 15**
**W-7770 Uberlingen/Bodensee(DE)**

(72) Erfinder: **Kunze, Wolfgang**
**Pommernstrasse 60**
**W-6054 Rodgau 6(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

## Beschreibung

Die Erfindung betrifft ein Verfahren zur Dynamischen-Leistungs-Differenz-Kalorimetrie, bei welchem

(a) eine Probe und eine Referenz einem vorgegebenen Temperaturprogramm unterworfen werden,

(b) die der Probe und der Referenz zugeführten Heizleistungen relativ zueinander in Abhängigkeit von Temperaturdifferenzen zwischen Probe und Referenz im Sinne einer Herausregelung der Temperaturdifferenzen verändert werden und

(c) die Differenz dieser der Probe und der Referenz zugeführten Heizleistungen ausgegeben wird.

Ein solches Verfahren ist beispielsweise bekannt durch die US-PS 3 263 484.

Es geht dabei um folgendes: Wenn eine Probe einem Temperaturprogramm unterworfen wird, also beispielsweise die Temperatur linear mit der Zeit erhöht wird, dann können in einer solchen Probe endotherme oder exotherme Umwandlungen auftreten, durch welche Energie verbraucht oder Energie freigesetzt wird. Es kann sich dabei um physikalische Umwandlungen wie Schmelzen handeln, es können aber auch beispielsweise chemische Reaktionen auftreten. Die Bestimmung dieser Umwandlungspunkte kann Aufschlüsse über die Art der untersuchten Probe geben. Um diese Umwandlungswärmen zu messen, werden bei der bekannten Anordnung eine Probe und eine Referenz auf je einer beheizbaren Platte angeordnet, so dass ihnen getrennt und unabhängig voneinander Heizenergie zugeführt werden kann. An Probe und Referenz ist je ein Temperaturfühler angeordnet. Eine Programmsteuerung sorgt dafür, dass der Mittelwert der Temperaturen von Probe und Referenz einem vorgegebenen Temperaturprogramm folgt. Weiterhin ist ein Regler vorgesehen, der durch unsymmetrische Zuführung von Heizenergie zu Probe und Referenz die Temperaturdifferenz zwischen Probe und Referenz herausregelt. Es ist eine Messvorrichtung vorgesehen, welche die Differenz der zu der Probe und der Referenz zugeführten Heizleistungen auf eine Spannungsdifferenz zuführt, die dann als Mass für die Umwandlungswärmen der Probe aufgezeichnet wird.

Ein solches Verfahren ist auch beschrieben in "Analytical Chemistry", 36 (1964), 1233 bis 1238.

Eine andere Anordnung dieser Art ist beschrieben in "Analytical Chemistry 36 (1964), 1238 bis 1245.

Ähnliche Anordnungen sind auch in der Druckschrift TRAC. TRENDS IN ANALYTICAL CHEMISTRY, Band 2, Nr. 4, April 1983, Seiten 88-92, Elsevier Scientific Publishing Co., Cambridge, GB;

C. Taylor: "Differential scanning calorimetry and fibre analysis", Seite 88 und 89 sowie in der EP-A-0 189 882, wobei im letzteren Fall jedoch ein Vergleich der Heizleistungen nicht erfolgt.

Schliesslich ist ein Verfahren zur quantitativen Thermoanalyse mit einem Differentialkalorimeter beschrieben in "Chemie-Technik" 5 (1976) 321 bis 325. Bei dieser bekannten Anordnung sind ebenfalls eine Probe und eine Referenz in zwei verschiedenen, getrennt beheizbaren Öfen angeordnet. Ein Programmgeber steuert über einen Programmverstärker die Heizungen der Öfen für Probe und Referenz. An jedem der beiden Öfen ist ein Temperaturfühler angeordnet, der auf die Temperatur der Probe bzw. der Referenz anspricht. Die Differenzen dieser beiden Temperaturen steuern über einen " T-Verstärker" einen Heizleistungsverstärker, durch welchen eine Ausgleichsheizung auf Probe und Referenz so aufschaltbar ist, dass die Temperaturdifferenz herausgeregelt wird. Ein Schreiber enthält als Abszisse die von dem Programmgeber vorgegebene Temperatur und als Ordinate die von dem Heizleistungsverstärker zugeführte Ausgleichsheizung.

Die bekannten Verfahren und Vorrichtungen erfordern zwei Öfen. Es ist ein ausserordentlich grosser technischer Aufwand nötig, diese beiden Öfen hinreichend genau aneinander anzugleichen, so dass ein genau reproduzierbarer Zusammenhang zwischen der Differenz der zu der Probe und Referenz zugeführten Heizleistungen und der tatsächlichen Energieaufnahme oder Abgabe der Probe sichergestellt ist. Die beiden Öfen mit den zugehörigen Abgleich- und Regelmitteln stellen ausserdem einen erheblichen baulichen Aufwand dar.

Aus PATENT ABSTRACTS OF JAPAN, Band 9 Nr. 207 (P-382) (1930), 24. August 1985; & JP-A-60 68 411 (Shinkuu Rikou K.K.) 19-04-1985 ist eine Vorrichtung bekannt, bei der in nur einem Ofen, jedoch darin in zwei voneinander getrennten Kammern eine Referenz und eine Probe gleichmässig und gleichzeitig erhitzt werden. Ein Vergleich der Heizleistungen findet hier nicht statt sondern nur die Messung und Ausgabe der Temperaturdifferenz zwischen Probe und Referenz.

Durch die WO-A-82/01248 ist eine Vorrichtung bekannt, durch welche Edelmetallstäbe oder -barren auf Echtheit geprüft werden. Zu diesem Zweck wird ein Wärmeimpuls auf ein Ende des Stabes gegeben und der daraus resultierende zeitliche Temperaturverlauf mit dem gespeicherten Temperaturverlauf verglichen, der in der gleichen Vorrichtung mit einem Normal erhalten wurde. Als Kriterium für die Echtheit des Prüfkörpers wird somit praktisch die Übereinstimmung der Wärmeleiteigenschaften mit denen des Originals benutzt. Es geht dort nicht um die Wärmeaufnahme oder -abgabe einer Probe infolge endothermer oder exothermer Prozesse beim Durchlaufen eines vorgegebenen Temperaturprogrammes.

Der Erfindung liegt die Aufgabe zugrunde, ein Verfahren der eingangs genannten Art so auszubilden, das Probe und Referenz sicher unter genau gleichen Bedingungen dem Temperaturprogramm unterworfen werden und daß ein zusätzlicher Abgleich vermieden werden kann.

Erfindungsgemäß wird diese Aufgabe dadurch gelöst, daß

(d) in einem einzigen Ofen zunächst allein die Referenz dem Temperaturprogramm unterworfen wird,

(e) die Werte der dabei der Referenz zugeführten Heizleistung als Funktion der dabei an dem Ofen gemessenen Temperatur gespeichert werden,

(f) anschließend die Probe in dem gleichen Ofen zur Erzeugung des Temperaturprogramms mit den Heizleistungen beaufschlagt wird, die zu den einzelnen Temperaturen gespeichert sind,

(g) die tatsächlichen Temperaturen der Probe gemessen werden,

(h) der Probe eine zusätzliche Ausgleichsheizleistung zugeführt wird, die nach Maßgabe der Differenz zwischen der gespeicherten, programmierten Temperatur und der tatsächlichen Temperatur im Sinne einer Herausregelung dieser Differenz verändert wird, und

(i) diese zusätzliche Ausgleichsheizleistung ausgegeben wird.

Nach dem erfindungsgemäßen Verfahren wird somit nur mit einem einzigen Ofen gearbeitet. Probe und Referenz werden unter genau den gleichen Bedingungen aufgeheizt. Die dazu bei der Referenz erforderliche Heizleistung ist in dem Speicher gespeichert, so daß diese Heizleistung dem Ofen auch für das anschließende Temperaturprogramm der Probe zugeführt werden kann. Zu jedem Wert der Heizleistung ist in dem Speicher außerdem der zugehörige Temperaturwert gespeichert, der an dem Ofen mit der Referenz gemessen wurde. Dieser gespeicherte Temperaturwert wird mit dem jetzt mit der Probe gemessenen tatsächlichen Temperaturwert verglichen. Die dabei erhaltene Temperaturdifferenz steuert die Ausgleichsheizleistung.

Bei dem erfindungsgemäßen Verfahren wird nicht etwa nur eine mit einer Referenz erhaltene Nullinie gespeichert und dann von dem eigentlichen Meßwert subtrahiert.

Einem solchen "klassischen" Verfahren würde es etwa entsprechen, daß, nachdem der Ofen mit Referenz dem Temperaturprogramm unterworfen und die Heizleistung als Funktion der Zeit gespeichert wurde, das gleiche mit der Probe durchgeführt und die Differenzen der dann gemessenen und der gespeicherten Heizleistungen bestimmt werden. Gerade das tut aber die Erfindung nicht, denn damit würde in unerwünschter Weise die Zeit in die Messung eingehen.

Es wird zunächst mit der Referenz die Temperatur als Funktion der Zeit nach einem Programm verändert und die Heizleistung als Funktion der programmierten Temperatur gespeichert. Es werden dann nacheinander die gespeicherten Heizleistungen auf die zu untersuchende Probe gegeben. Mit dieser Heizleistung würde sich jedoch bei der Probe unter Umständen, z.B. im Falle von endothermen oder exothermen Prozessen, eine andere Temperatur ergeben als sie der dieser Heizleistung zugeordneten Temperatur entspricht. Deshalb ist ein weiterer Regelkreis vorgesehen, der auf die Differenz der der jeweiligen Heizleistung zugeordneten Temperatur und der tatsächlich gemessenen Temperatur anspricht und eine Zusatzheizung liefert, welche diese Differenz auf null bringt. Diese Zusatzheizung wird gemessen und aufgezeichnet. Der Zeitfaktor ist bei einem solchen Verfahren vollständig ausgeschaltet.

Das ist ein grundsätzlich anderer Vorgang als etwa eine Nullinienbestimmung und -speicherung:

Die beim ersten Lauf mit der Referenz gemessenen und gespeicherten Meßwerte (Heizleistung) werden nicht von Meßwerten des zweiten Laufs subtrahiert, wie das bei einer gespeicherten Nullinie der Fall wäre. Sie werden vielmehr benutzt, um den Ofen im zweiten Lauf mit der Probe "open loop" zu steuern. Der eigentliche Meßwert ist eine Heizleistung, die in einem zusätzlichen geschlossenen Regelkreis erzeugt wird.

Die Erfindung betrifft auch eine Vorrichtung zur Durchführung des beschriebenen Verfahrens, enthaltend

(a) eine Vorrichtung zur Veränderung der Temperatur einer Probe und einer Referenz nach einem vorgegebenen Temperaturprogramm,

(b) einen Regler zur Veränderung der der Probe und der Referenz zugeführten Heizleistungen relativ zueinander in Abhängigkeit von Temperaturdifferenzen zwischen Probe und Referenz im Sinne einer Herausregelung der Temperaturdifferenzen, und

(c) eine Ausgabeeinrichtung zum Ausgeben der Differenz dieser der Probe und der Referenz zugeführten Heizleistungen.

Diese Vorrichtung ist dadurch gekennzeichnet, daß

(d) die Einrichtung zur Veränderung der Temperatur der Probe und der Referenz einen einzigen Ofen enthält, in welchen die Referenz und die Probe nacheinander einsetzbar sind,

(e) die Einrichtung zur Veränderung der Temperatur der Probe und der Referenz weiterhin eine Programmsteuerung enthält, durch welche die dem einzigen Ofen zugeführte Heizleistung nach einem vorgegebenen Programm veränderbar ist,

(f) an dem Ofen ein Temperaturfühler vorgesehen ist, der auf die Temperatur von Probe bzw. Referenz anspricht,

(g) ein Speicher vorgesehen ist, in welchem die Werte der dem Ofen mit der Referenz zugeführten Heizleistungen als Funktion der dabei mittels des Temperaturfühlers an dem Ofen gemessenen Temperaturen speicherbar sind,

(h) der Speicher auf die Programmsteuerung aufschaltbar ist, so daß nacheinander Heizleistungen entsprechend den gespeicherten Werten auf den Ofen aufgeschaltet werden,

(i) ein Regler vorgesehen ist, auf welchen als Eingangsgröße die Differenz der von dem Temperaturfühler gemessenen tatsächlichen Temperatur der Probe und einer im Speicher gespeicherten, der vom Speicher vorgegebenen Heizleistung zugeordneten Temperatur aufgeschaltet ist und durch welchen der Probe eine zusätzliche Ausgleichsheizleistung im Sinne einer Herausregelung dieser Differenz zugeführt wird, und

(j) eine Ausgabeeinrichtung zur Messung und Ausgabe dieser Ausgleichsheizleistung vorgesehen ist.

Ein Ausführungsbeispiel der Erfindung ist nachstehend unter Bezugnahme auf die zugehörigen Zeichnungen näher erläutert:

Fig. 1     zeigt eine Vorrichtung zur Dynamischen-Leistungs-Differenz-Kalorimetrie bei einem Nullauf mit einer Referenz.

Fig. 2     zeigt die Vorrichtung bei dem Meßlauf mit einer zu untersuchenden Probe.

Die Vorrichtung enthält einen Ofenteil 10 und einen Rechner 12, in welchem die Temperatur- und Heizleistungsprogramme speicherbar sind. Der Ofenteil 10 enthält einen Ofen 14, in welchem eine Probe oder eine Referenz beheizbar ist. Als Referenz kann dabei u.U. auch der leere Ofen 14 dienen. Mit 16 ist schematisch eine elektrische Heizvorrichtung bezeichnet. Mit 18 ist ebenso schematisch ein Temperaturfühler bezeichnet. Der Temperaturfühler 18 liefert den Temperatur-Istwert $T_{ist}$ des Ofens 14 und damit der Probe bzw. Referenz.

Bei der Betriebsweise "Referenzmessung" wird ohne Probe oder mit einer bekannten Referenzprobe gearbeitet. Die Referenzprobe sollte etwa die gleiche Wärmekapazität wie die zu untersuchende Probe besitzen und in dem programmierten Temperaturbereich keinen endothermen oder exothermen Umwandlungen unterworfen sein. Der Rechner 12 gibt an einem Ausgang 20 ein Temperaturprogramm ab, also einen bestimmten Verlauf eines Temperatur-Sollwertes $T_{soll}$ von der Zeit. Dieser Temperatur-Sollwert $T_{soll}$ wird über Leitung 22 auf einen Temperaturregler 24 gegeben. Der Heizleistungsregler 24 erhält von dem Temperaturfühler 18 über eine Leitung 28 den Temperatur-Istwert $T_{ist}$ . Der Temperaturregler 24 gibt eine solche Heizleistung Q auf die elektrische Heizvorrichtung 16, daß der Temperatur-Istwert $T_{ist}$ dem vom Programm vorgegebenen Temperatur-Sollwert $T_{soll}$ (Führungsgröße) nachgeführt wird. Die dafür der Heizvorrichtung 16 zugeführte Heizleistung Q wird von dem Rechner 12 abgespeichert. Ebenfalls abgespeichert wird der dazugehörige Temperatur-Istwert $T_{ist}$ . Die Abspeicherung des Temperatur-Istwertes $T_{ist}$ erfolgt über eine Leitung 30. Die Abspeicherung der zugehörigen Heizleistung Q erfolgt über eine Leitung 32. Der Rechner 12 enthält geeignete (nicht dargestellte) A/D-Wandler. Der Rechner 12 speichert dann digital zueinandergehörige Werte von Temperatur und Heizleistung, also eine Funktion (Q(T), wobei die als Temperatur-Istwert gespeicherte Temperatur die unabhängige und die Heizleistung die abhängige Variable darstellt. Die Funktion gibt also für jede Temperatur an, welche Heizleistung erforderlich ist, um die Referenz - also eine Referenzprobe oder den leeren Ofen - auf dieser Temperatur zu halten.

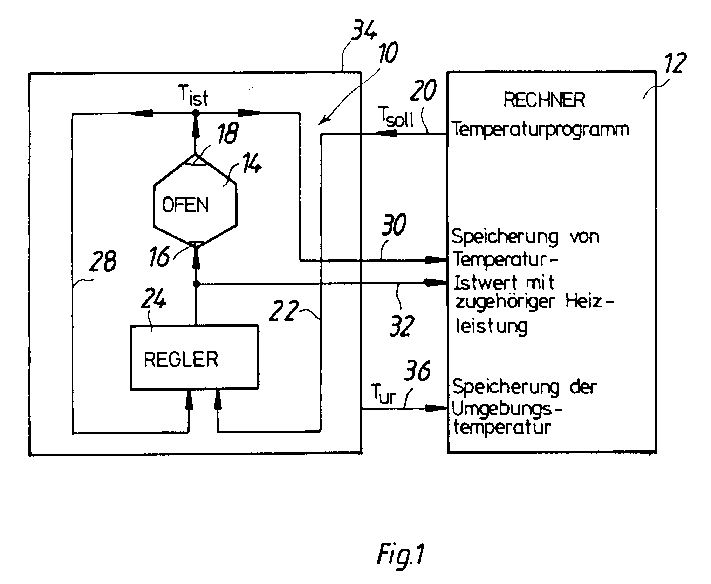

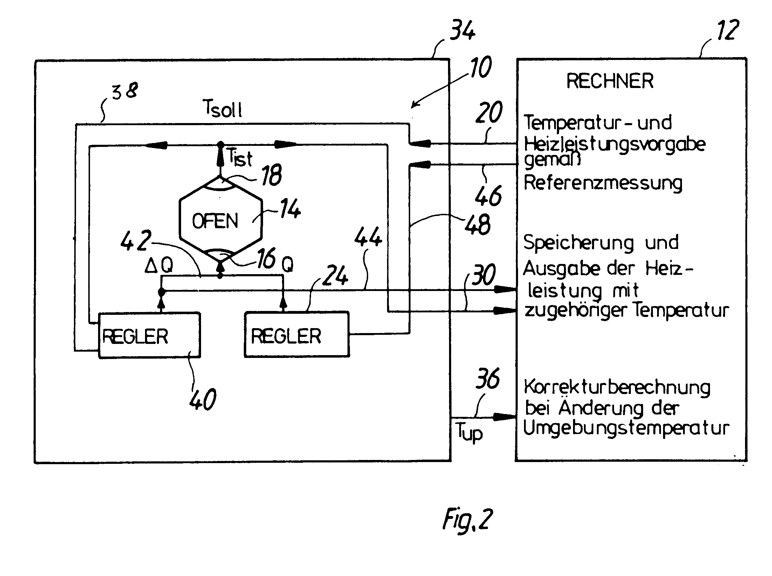

Die zur Aufrechterhaltung einer vorgegebenen Temperatur des Ofens mit der Referenzprobe erforderliche Heizleistung Q hängt auch ab von der Temperatur $T_u$ der Umgebung des Ofens 14. Diese Umgebung des Ofens, beispielsweise eine den Ofen umgebende Gehäusewandung, ist in der schematischen Darstellung von Fig.1 als rechteckige Umrandung 34 dargestellt. Bei der in Fig.1 und 2 dargestellten Ausführung wird diese Temperatur $T_u$ durch einen Temperaturfühler gemessen und ebenfalls dem Rechner 12 zugeführt. Das ist durch eine Leitung 36 dargestellt. Der Rechner 12 speichert diese während der Referenzmessung gemessene Temperatur $T_u$ der Umgebung 34 zusammen mit dem zugehörigen Temperatur-Istwert. Es ist in dem Rechner 12 also nicht nur die Funktion Q(T) sondern auch die Funktion $T_u$ (T) gespeichert, die während der Referenzmessung erhalten wurde.

Anschließend erfolgt eine Messung mit einer zu untersuchenden Probe. Das ist schematisch in Fig.2 dargestellt, in welcher entsprechende Teile die gleichen Bezugszeichen tragen wie in Fig.1.

Bei der Betriebsweise "Probenmessung" liefert der Rechner 12 ein Temperaturprogramm mit einem Temperatur-Sollwert $T_{soll}$ an dem Ausgang 20. Dieser Temperatur-Sollwert $T_{soll}$ wird jedoch nicht wie bei der Referenzmessung von Fig.1 auf den Temperaturregler 24 sondern über eine Leitung 38 auf einen zweiten Temperaturregler 40 geschaltet. Dieser zweite Temperaturregler 40 erhält als zweiten Eingang den Temperatur-Istwert $T_{ist}$, der wieder von dem Temperaturfühler 18 geliefert wird. Der zweite Temperaturregler 40 steuert über eine Leitung 42 eine Zusatzheizung $\Delta$ Q der elektrischen Heizvorrichtung 16. Der Wert dieser Zusatzheizung Δ Q wird außerdem über eine Leitung 44 auf den Rechner 12 gegeben und von diesem gespeichert.

Der Temperaturregler 24 wird von dem Ausgang 46 des Rechners 12 über eine Leitung 48 so angesteuert, daß er eine vorgegebene Heizleistung Q liefert, unabhängig von dem jeweiligen Temperatur-Istwert. Diese Heizleistung Q, die am Ausgang 46 des Rechners 12 jeweils vorgegeben wird, hängt von dem gleichzeitig am Ausgang 20 erscheinenden Temperatur-Sollwert $T_{soll}$ nach der oben erwähnten, in Rechner 12 gespeicherten Funktion Q(T) ab. Das bedeutet: Wenn ein bestimmter Temperatur-Sollwert $T_{soll}$ über den Ausgang 20 vorgegeben wird, dann wird vom Rechner 12 über den Ausgang 46 eine solche Heizleistung $Q(T_{soll})$ vorgegeben und über den Temperaturregler 24 an der Heizvorrichtung 16 erzeugt, daß sich mit der Referenz ein dem Temperatur-Sollwert $T_{soll}$ entsprechender Temperatur-Istwert eingestellt hätte. Wenn der tatsächliche Temperatur-Istwert von dem vorgegebenen Temperatur-Sollwert abweicht, dann wird über den Temperaturregler 40 in Abhängigkeit von der Temperaturdifferenz Δ T zwischen Temperatur-Istwert und Temperatur-Sollwert die Zusatzheizung Δ Q auf die Heizvorrichtung 16 gegeben. Diese Zusatzheizung ist somit der zusätzliche Wärmebedarf, der im Vergleich zur Referenz bei der zu untersuchenden Probe erforderlich ist, um die vorgegebene Temperatur zu erreichen. Das ist also die Wärme, die von der zu untersuchenden Probe zusätzlich aufgenommen wird, wenn die zu untersuchende Probe bei einer bestimmten Temperatur eine endotherme Umwandlung erfährt. Entsprechend kann durch den Temperaturregler 40 auch eine Reduzierung der zugeführten Heizleistung unter die von dem Temperaturregler 24 eingesteuerte Heizleistung Q erfolgen, wenn die zu untersuchende Probe eine exotherme Reaktion erfährt, also Wärme abgibt.

Diese Zusatzheizung Δ Q (die, wie gesagt, auch negativ sein kann), wird über Leitung 44 auf den Rechner 12 gegeben. Die Zusatzheizung Δ Q wird von dem Rechner 12 gespeichert, und zwar zusammen mit dem zugehörigen Temperatur-Istwert $T_{ist}$. Dieser Temperatur-Istwert $T_{ist}$ von dem Temperaturfühler 18 wird über Leitung 30 dem Rechner 12 zugeführt. Es kann dann von dem Rechner 12 durch übliche Aufzeichnungsmittel wie Bildschirm oder Plotter die Funktion Δ Q = Δ Q($T_{ist}$) ausgegeben werden. Es kann aber auch eine Verarbeitung der so erhaltenen Daten in dem Rechner 12 erfolgen.

Auch bei der Probenmessung wird die Temperatur $T_{up}$ der Umgebung 34 gemessen und über Leitung 36 dem Rechner 12 zugeführt. Sie wird dort mit der zu dem gleichen Temperatur-Istwert bei der Referenzmessung gespeicherten Umgebungstemperatur $T_{ur}$ verglichen.

Aus der Differenz der Umgebungstemperaturen wird ein Korrekturwert für die Zusatzheizung Δ Q berechnet, wenn sich die Umgebungstemperatur zwischen Referenzmessung und Probenmessung geändert hat.

**Patentansprüche**

1. Verfahren zur Dynamischen-Leistungs-Differenz-Kalorimetrie, bei welchem

    (a) eine Probe und eine Referenz einem vorgegebenen Temperaturprogramm unterworfen werden,

    (b) die der Probe und der Referenz zugeführten Heizleistungen relativ zueinander in Abhängigkeit von Temperaturdifferenzen zwischen Probe und Referenz im Sinne einer Herausregelung der Temperaturdifferenzen verändert werden und

    (c) die Differenz dieser der Probe und der Referenz zugeführten Heizleistungen ausgegeben wird,

    dadurch gekennzeichnet, daß

    (d) in einem einzigen Ofen zunächst allein die Referenz dem Temperaturprogramm unterworfen wird,

    (e) die Werte der dabei der Referenz zugeführten Heizleistung als Funktion der dabei an dem Ofen gemessenen Temperatur gespeichert werden,

    (f) anschließend die Probe in dem gleichen Ofen zur Erzeugung des Temperaturprogramms mit den Heizleistungen beaufschlagt wird, die zu den einzelnen Temperaturen gespeichert sind,

    (g) die tatsächlichen Temperaturen der Probe gemessen werden,

    (h) der Probe eine zusätzliche Ausgleichsheizleistung zugeführt wird, die nach Maßgabe der Differenz zwischen der gespeicherten, programmierten Temperatur und der tatsächlichen Temperatur in Sinne einer Herausregelung dieser Differenz verändert wird, und

    (i) diese zusätzliche Ausgleichsheizleistung ausgegeben wird.

2. Vorrichtung zur Durchführung des Verfahrens nach Anspruch 1, enthaltend

    (a) eine Einrichtung zur Veränderung der Temperatur einer Probe une einer Referenz nach einem vorgegebenen Temperaturprogramm,

    (b) einen Regler zur Veränderung der der Probe und der Referenz zugeführten Heizleistungen relativ zueinander in Abhängigkeit von Temperaturdifferenzen zwischen Probe und Referenz im Sinne einer Herausregelung der Temperaturdifferenzen, und

(c) eine Ausgabeeinrichtung zum Ausgeben der Differenz dieser der Probe und der Referenz zugeführten Heizleistungen,

dadurch gekennzeichnet, daß

(d) die Einrichtung zur Veränderung der Temperatur der Probe und der Referenz einen einzigen Ofen enthält, in welchen die Referenz und die Probe nacheinander einsetzbar sind,

(e) die Einrichtung zur Veränderung der Temperatur der Probe und der Referenz weiterhin eine Programmsteuerung enthält, durch welche die dem einzigen Ofen zugeführte Heizleistung nach einem vorgegebenen Programm veränderbar ist,

(f) an dem Ofen ein Temperaturfühler vorgesehen ist, der auf die Temperatur von Probe bzw. Referenz anspricht,

(g) ein Speicher vorgesehen ist, in welchem die Werte der dem Ofen mit der Referenz zugeführten Heizleistungen als Funktion der dabei mittels des Temperaturfühlers an dem Ofen gemessenen Temperaturen speicherbar sind,

(h) der Speicher auf die Programmsteuerung aufschaltbar ist, so daß nacheinander Heizleistungen entsprechend den gespeicherten Werten auf den Ofen aufgeschaltet werden,

(i) ein Regler vorgesehen ist, auf welchen als Eingangsgröße die Differenz der von dem Temperaturfühler gemessenen tatsächlichen Temperatur der Probe und einer im Speicher gespeicherten, der vom Speicher vorgegebenen Heizleistung zugeordneten Temperatur aufgeschaltet ist und durch welchen der Probe eine zusätzliche Ausgleichsheizleistung im Sinne einer Herausregelung dieser Differenz zugeführt wird, und

(j) eine Ausgabeeinrichtung zur Messung und Ausgabe dieser Ausgleichsheizleistung vorgesehen ist.

## Claims

1. Method for dynamic power differential calorimetry, wherein

    (a) a sample and a reference are subjected to a predetermined temperature program,

    (b) the heating powers supplied to the sample and the reference are varied relative to each other as a function of temperature differences between sample and reference so as to eliminate the temperature differences, and

(c) the difference of these heating powers supplied to the sample and the reference is output,

**characterized in that**

(d) at first, only the reference alone is subjected to the temperature program in one single furnace,

(e) the values of the heating power thus supplied to the reference is stored as a function of the temperature thus measured at the furnace,

(f) subsequently, in order to generate the temperature program, the sample is subjected, in the same furnace, to the heating powers which are stored associated with the individual temperatures,

(g) tie actual temperatures of the sample are measured,

(h) an additional compensating heating power is supplied to the sample, which compensating heating power is varied in accordance with the difference between the stored programmed temperature and the actual temperature so as to eliminate this difference, and

(i) this additional compensating heating power is output.

2. Device for carrying out the method as set forth in claim 1, comprising

    (a) a device for varying the temperature of a sample and a reference according to a predetermined temperature program,

    (b) a controller for varying the heating powers supplied to the sample and the reference realative to each other as a function of temperature differences between sample and reference so as to eliminate the temperature differences, and

    (c) an output device for the outputting of the difference of these heating powers supplied to the sample and the reference,

    **characterized in that**

    (d) the device for varying the temperature of a sample and a reference comprises one single furnace into which the reference and the sample is insertable consecutively,

    (e) the device for varying the temperature of a sample and a reference further comprises a program control which is adapted to vary the heating power supplied to the single furnace according to a predetermined program,

    (f) a temperature sensor is provided at the furnace, which temperature sensor responds to the temperature of sample and reference, respectively,

    (g) a memory is provided which is adapted to store the values of the heating powers supplied to the furnace with the reference as a function of the temperature thus measured at the furnace by means of the temperature sensor,

(h) the memory is arranged to communicate with the program control such that heating powers corresponding to the stored values are consecutively applied to the furnace,

(i) a controller is provided, to which the difference of the actual temperature of the sample measured by the temperature sensor and a temperature stored in the memory and associated with the heating power predetermined by the memory is applied, and by which an additional compensating heating power is supplied to the sample so as to eliminate this difference, and

(j) an output device is provided for measuring and output of this compensating heating power.

## Revendications

1. Procédé pour la calorimétrie de différence-puissance dynamique, dans lequel

(a) un échantillon et une référence sont soumis à un programme de température prédéterminé,

(b) les puissances de chauffage alimentées à l'échantillon et à la référence sont variées l'une par rapport à l'autre en fonction des différences de température entre l'échantillon et la référence de sorte à éliminer par réglage les différences de température, et

(c) la différence de ces puissances de chauffage alimentées à l'échantillon et à la référence est sortie,

    caractérisé par le fait que

(d) d'abord seule la référence est soumise au programme de température dans un seul four,

(e) les valeurs de la puissance de chauffage alimentée à la référence sont mémorisées comme fonction de la température alors mesurée au four,

(f) ensuite les puissances de chauffage mémorisées pour les températures différentes sont appliquées à l'échantillon dans le même four afin d'engendrer le programme de température,

(g) les températures reelles de l'échantillon sont mesurées,

(h) à l'échantillon est alimentée une puissance de chauffage de compensation supplémentaie qui est variée selon la différence de la température programmée mémorisée et la température réelle de sorte à éliminer cette différence par réglage, et

(i) cette puissance de chauffage de compensation est sortie.

2. Dispositif destiné à executer le procédé selon la revendication 1, comprenant

(a) un dispositif destine à varier la température d'un échantillon et d'une référence selon un programme de température prédéterminé,

(b) un régulateur destiné à varier les puissances de chauffage alimentées à l'chantillon et a la référence l'un par rapport à l'autre en fonction des différences de tempérture entre l'échantillon et la référence de sorte à éliminer par réglage les différences de température, et

(c) un dispositif de sortie destiné à sortir la différence des puissances de chauffage alimentées à l'échantillon et à la référence,

    caractérisé par le fait que

(d) le dispositif destiné à varier la température de l'échantillon et de la référence comprend un seul four dans lequel la référence et l'échantillon peuvent être introduits succéssivement,

(e) le dispositif destiné à varier la température de l'échantillon et de la référence comprend, en outre, une commande de programme par laquelle la puissance de chauffage alimentée au seul four est variable selon un programme prédéterminé,

(f) un détecteur de température répondant à la température de l'échantillon et de la référence est prévu sur le four,

(g) une mémoire est prévue dans laquelle les valeurs des puissances de chauffage alimentées au four avec la référence sons mémorisables comme fonction des températures mesurées au four au moyen du détecteur de température,

(h) la mémoire est applicable à la commande de programme de sorte que des puissances de chauffage sont appliquées succéssivement au four conformément aux valeurs mémorisées,

(i) un régulateur est prévu, auquel est appliquée comme grandeur d'entrée la différence de la température de l'échantillon réellement mesurée par le détecteur de température et une température mémorisée dans la mémoire et associée à une puissance de chauffage prédéterminée par la mémoire, et par lequel une puissance de chauffage de compensation supplémentaire est alimentée à l'échantillon de sorte que cette différence est éliminée par réglage, et

(j) un dispositif de sortie est prévu afin de mesurer et de sortir cette puissance de chauffage de compensation.

EP 0 267 308 B1

*Fig.1*

Fig. 2